# FASCICULE DE BREVET EUROPEEN

(11) **EP 1 405 745 B1**
(45) Date de publication et mention de la délivrance du brevet: **09.05.2012**
(21) Numéro de dépôt: 03364019.4
(22) Date de dépôt: 03.10.2003
(51) Int. Cl.: B60J 3/02

(54) **Palette pare-soleil mobile le long du pavilon d'un véhicule et dispositif d'occultation d'un pavillon couplé à une telle palette pare-soleil et véhicule correspondant**
Panel für eine Fahrzeugsonnenblende beweglich entlang eines Fahrzeugsdaches und Vorrichtung zur Abdeckung eines Fahrzeugsdaches mit einem solchen Panel gekoppelt und entsprechendes Fahrzeug
Sun visor panel movable along the vehicle passenger compartment and covering device of passenger compartment coupled to said panel and corresponding vehicle

(30) Priorité: 04.10.2002 FR 0212382; 11.10.2002 FR 0212698
(43) Date de publication de la demande: 07.04.2004
(73) Titulaire: Advanced Comfort Systems France SAS - ACS France, 79300 Bressuire (FR)
(72) Inventeur: Jolivet, David, 79300 Bressuire (FR)
(74) Mandataire: Vidon, Patrice

(56) Documents cités:
- EP-A- 0 945 293
- US-A- 5 418 644

## Description

Le domaine de l'invention est celui des équipements automobiles. Plus précisément, l'invention concerne des moyens d'occultation destinés à être déployés en regard d'une ou de plusieurs baies du véhicule afin de protéger les yeux des occupants placés à l'avant du véhicule contre les rayons du soleil ou, plus généralement, pour réduire l'exposition au soleil de l'habitacle du véhicule.

Le document EP 0 945 293 présente notamment un pare-soleil escamotable, monticoulissant pour pouvoir se loger dans la garniture du pavillon. Ainsi, le rangement ne suppose pas une rotation (pendant laquelle la palette peut venir en contact avec le vitre de l'utilisateur, mais seulement un coulissement le long du pavillon.

La tendance actuelle est de proposer des véhicules automobiles présentant de plus en plus de surfaces vitrées. On cherche donc à augmenter tant que faire se peut la surface des vitres latérales, des pare-brises et des lunettes arrière, et également des baies ménagées dans les pavillons.

Les objectifs de cette tendance sont divers et variés et concernent notamment :
- une meilleure visibilité pour les occupants du véhicule ;
- une luminosité accrue à l'intérieur du véhicule ;
- une sensation d'espace élargi pour les occupants ;
- l'esthétisme général du véhicule ;
- ...

Dans ce contexte, de nouveaux véhicules sont en cours d'étude.

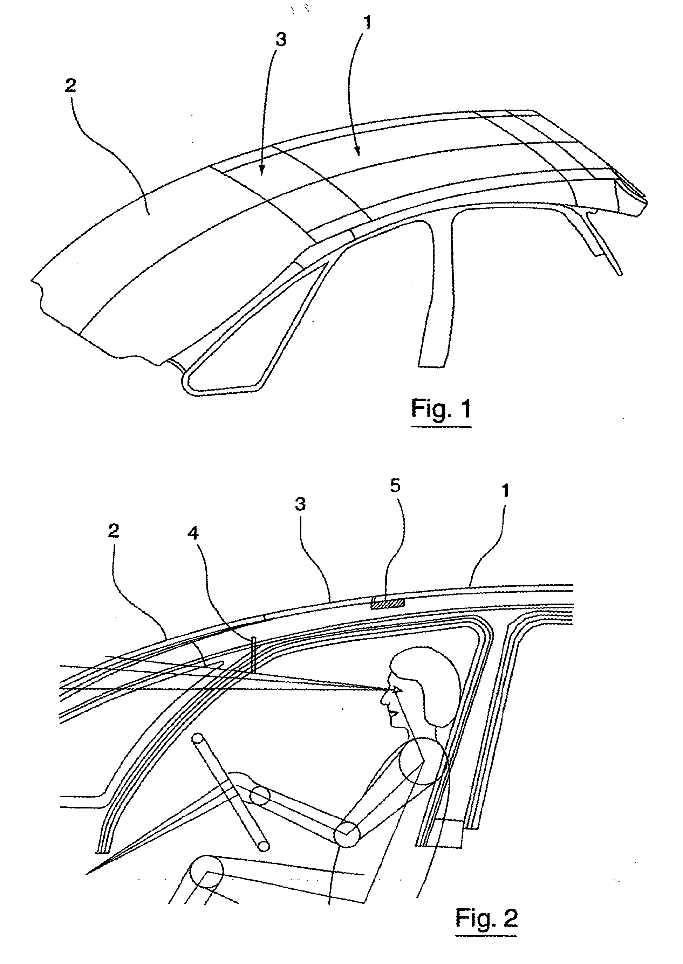

Les figures 1 et 2 illustrent ce type de véhicule selon lequel il est prévu un pavillon vitré 1 et un pare-brise 2 se prolongeant par l'intermédiaire d'un panneau vitré 3 en direction du pavillon pour rejoindre celui-ci de façon sensiblement coplanaire et affleurante.

L'invention s'applique en particulier, mais non exclusivement, à ce type de véhicule.

En effet, un tel agencement du pare-brise se prolongeant jusqu'au pavillon vitré présente une difficulté s'agissant de la mise en place et de la fixation des palettes pare-soleil 4 classiquement prévues au niveau du pare-brise, approximativement dans la position représentée sur la figure 2.

Avec les pare-brise classiques, ces palettes pare-soleil sont montées sur un élément de carrosserie au voisinage du bord supérieur du pare-brise, de façon à être mobiles en rotation entre une position rabattue contre le pavillon et une position rabaissée vers le pare-brise pour protéger les yeux du conducteur et/ou du passager avant contre le rayonnement du soleil.

Or, selon l'agencement illustré par les figures 1 et 2, il apparaît clairement que la poutre 5 se situant au niveau où se rejoignent le pavillon vitré 1 et le prolongement 3 du pare-brise 2 n'est pas un emplacement approprié pour la mise en place d'une palette pare-soleil, celle-ci ne pouvant à cet endroit exercer sa fonction de protection contre le soleil sans nuire à la visibilité du conducteur.

Bien entendu, il serait tout à fait concevable de rapporter sur le pare-brise 1, par exemple par collage, des supports de palettes pare-soleil.

Toutefois, cette solution s'avèrerait particulièrement inesthétique et incompatible avec l'allure générale recherchée à travers ce type de véhicule.

L'invention a donc pour objectif de proposer une solution pour la mise en oeuvre d'une ou de plusieurs palettes pare-soleil à l'intérieur d'un véhicule, selon une configuration différente de celle de l'art antérieur.

L'invention a également pour objectif de fournir une telle solution qui soit adaptée à l'esthétisme recherché à travers des véhicules du type de ceux décrits précédemment.

L'invention a aussi pour objectif de fournir une telle solution qui soit simple de conception et facile à mettre en oeuvre.

L'invention a encore pour objectif de fournir une telle solution qui puisse être fabriquée, et montée à l'intérieur d'un véhicule, rapidement et à moindre coût.

Ces objectifs, ainsi que d'autres qui apparaîtront par la suite sont atteints grâce à l'invention selon la revendication 1. La palette pare-soleil est portée par au moins un support monté mobile sur ledit pavillon, ou sur un élément solidaire dudit pavillon, de telle sorte que ladite palette pare-soleil puisse occuper au moins deux positions :
- une position de protection des yeux des occupants des sièges avants dudit véhicule contre le rayonnement du soleil ;
- une position de rangement, éloignée de ladite position de protection vers l'arrière dudit véhicule,
le ou lesdits supports étant solidaires d'une barre de tirage ou d'un tube d'enroulement d'un dispositif d'occultation d'une baie ménagée dans ledit pavillon, mettant en oeuvre une toile d'occultation mobile entre une position repliée et une position déployée.

De cette façon, la palette pare-soleil peut être amenée dans une position opérationnelle, au voisinage du pare-brise, pour protéger les yeux des occupants avant du véhicule, tandis qu'elle peut être éloignée du pare-brise dans une position de rangement dans laquelle elle n'apparaît pas derrière le pare-brise ou au voisinage de la zone où se rejoignent le pare-brise et le pavillon vitré.

On exploite en outre les moyens d'un dispositif d'occultation d'un pavillon équipant classiquement un véhicule pour rendre mobiles les supports de palettes pare-soleil.

Selon une première variante, ledit organe mobile est monté dans ledit ou lesdits rails en avant de ladite barre de coulissement par rapport à l'axe longitudinal dudit véhicule.

Ainsi, la toile du dispositif d'occultation peut être dépliée ou reployée tandis que la palette pare-soleil reste en arrière du véhicule. En revanche, le déplacement vers l'avant du véhicule de la palette provoque le déploiement systématique de la toile du dispositif d'occultation.

Selon une deuxième variante, ledit organe mobile est monté dans ledit ou lesdits rails en arrière de ladite barre de coulissement par rapport à l'axe longitudinal dudit véhicule.

On obtient ainsi un fonctionnement différent de celui indiqué précédemment, selon lequel la palette peut être déplacée d'avant en arrière, le long du pavillon, sans nécessairement déployer la toile du dispositif d' occultation.

L'esthétisme général des véhicules du type de ceux décrits précédemment est ainsi respecté.

L'invention propose donc une solution originale, allant à l'encontre des solutions classiques de l'art antérieur selon lesquelles les palettes pare-soleil sont montées de façon constante sur des supports fixes au voisinage du pare-brise.

Selon une première approche de l'invention, ledit ou lesdits supports sont guidés en coulissement le long d'au moins un rail dit premier s'étendant le long dudit pavillon. Dans ce cas, ledit ou lesdits supports sont avantageusement portés par une barre de coulissement guidée en coulissement par ledit ou lesdits rails.

Selon un premier mode de réalisation de cette première approche, ledit ou lesdits rails forment moyen de guidage en coulissement également d'un organe mobile faisant partie d'un dispositif d'occultation d'une baie ménagée dans ledit pavillon, du type mettant en oeuvre une toile d'occultation mobile entre une position repliée et une position déployée.

Selon une deuxième approche de l'invention, ledit ou lesdits supports sont portés par un organe mobile le long dudit pavillon et faisant partie d'un dispositif d'occultation d'une baie ménagée dans ledit pavillon, du type mettant en oeuvre une toile d'occultation mobile entre une position repliée et une position déployée.

De tels dispositifs d'occultation sont largement répandus dans les véhicules actuels pour occulter les pavillons vitrés.

L'invention propose donc de combiner astucieusement la présence d'un tel dispositif d'occultation avec celle d'une ou plusieurs palettes pare-soleil, en utilisant des organes mobiles du dispositif d'occultation pour déplacer le long du pavillon la ou les palettes pare-soleil.

Les organes en question du dispositif d'occultation ont alors une double fonction : celle d'accompagner le déploiement/repliement de la toile d'occultation, et celle d'assurer le déplacement d'une palette pare-soleil le long du pavillon.

Selon un premier mode de réalisation de cette deuxième approche, ledit organe mobile est la barre de tirage dudit dispositif d'occultation. Dans ce cas, ladite barre de tirage présente avantageusement à chacune de ses extrémités au moins un patin de coulissement susceptible de coulisser le long dudit ou desdits premiers rails, ou dudit ou desdits deuxièmes rails.

Selon une première variante de ce mode de réalisation, le tube d'enroulement de ladite toile est monté dans une position fixe le long dudit pavillon.

Selon une deuxième variante de ce mode de réalisation, le tube d'enroulement de ladite toile est monté mobile le long dudit pavillon.

On obtient avec cette deuxième variante, une solution tout à fait modulaire, en ce sens que la ou les palettes pare-soleil peuvent être amenées dans une configuration opérationnelle au voisinage du pare-brise sans qu'il soit nécessaire de déployer la toile du dispositif d'occultation, la barre de tirage et le tube d'enroulement étant pour cela déplacés ensemble le long dudit pavillon.

Selon un deuxième mode de réalisation de la deuxième approche de l'invention, ledit organe mobile comprend le tube d'enroulement de ladite toile. Dans ce cas, ledit tube d'enroulement est préférentiellement monté dans un boîtier ou un capot portant ledit ou lesdits supports, ledit boîtier ou ledit capot présentant avantageusement à chacune de ses extrémités au moins un patin de coulissement susceptible de coulisser le long dudit ou desdits premiers rails.

Selon une première variante de ce mode de réalisation, la barre de tirage de ladite toile est montée fixe le long dudit pavillon.

Selon une deuxième variante de ce mode de réalisation, la barre de tirage de ladite toile est montée mobile le long dudit pavillon.

A nouveau, cette solution est modulaire, permettant d'amener la ou les palettes pare-soleil dans une position opérationnelle sans qu'il soit nécessaire de déployer la toile du dispositif d'occultation.

Préférentiellement, la palette pare-soleil est montée mobile à rotation sur ledit ou lesdits supports, entre une position rabattue contre ou au voisinage du pavillon dudit véhicule et une position rabaissée en direction dudit pare-brise.

Le dispositif d'occultation d'une baie est ménagée dans le pavillon d'un véhicule, et est du type mettant en oeuvre une toile d'occultation mobile entre une position repliée et une position déployée. Ladite toile est solidaire par l'une de ses extrémités d'au moins un organe dit proximal susceptible d'être déplacé le long dudit pavillon entre au moins deux positions :
- une première position correspondant sensiblement à ladite position de ladite palette dans laquelle ladite palette protège les yeux des occupants des sièges avants dudit véhicule contre le rayonnement du soleil ;
- une position correspondant sensiblement à ladite position de rangement de ladite palette, éloignée de ladite première position vers l'arrière dudit véhicule,
ladite toile étant solidaire par son autre extrémité d'un organe dit distal susceptible d'occuper au moins une position correspondant sensiblement à ladite position de rangement de ladite palette, ledit organe proximal portant ledit ou lesdits supports de ladite palette pare-soleil.

Selon un premier mode de réalisation d'un tel dispositif d'occultation, ledit organe proximal est une barre de tirage, ledit organe distal comprenant le tube d'enroulement de ladite toile.

Selon un deuxième mode de réalisation d'un tel dispositif d'occultation, ledit organe proximal comprend le tube d'enroulement de ladite toile, ledit organe distal étant une barre de tirage.

L'invention concerne aussi un véhicule selon la revendication II.

Avantageusement, un tel véhicule comprend deux palettes pare-soleil, l'une montée côté conducteur, l'autre montée côté passager avant, ledit véhicule comprenant au moins deux rails latéraux s'étendant de part et d'autre dudit pavillon et au moins un rail central, parallèle auxdits rails latéraux, de façon à guider le coulissement dudit ou desdits supports de chacune desdites palettes pare-soleil.

D'autres caractéristiques et avantages de l'invention apparaîtront plus clairement à la lecture de la description suivante de différents modes de réalisation préférentiels de l'invention donnés, à titre d'exemple illustratif et non limitatif, et des dessins annexés parmi lesquels :
- les figures 1 et 2 sont des vues respectivement en perspective et en coupe d'un véhicule destiné à être équipé d'une palette pare-soleil selon l'invention ;
- la figure 3 est une vue en coupe de côté d'un premier mode de réalisation d'une première approche d'une palette pare-soleil ne faisant pas partie de l'invention, selon laquelle le support de la palette n'est pas solidaire d'un organe mobile faisant partie d'un dispositif d'occultation du pavillon du véhicule ;
- la figure 4 est une vue en coupe de côté d'une variante du mode de réalisation illustré par la figure 3 ;
- la figure 5 est une vue en coupe de côté d'une autre variante du mode de réalisation illustré par la figure 3 ;
- la figure 6 est une vue en coupe de côté d'un deuxième mode de réalisation de la première approche d'une palette pare-soleil ne faisant pas partie de l'invention ;
- la figure 7 est une vue en coupe de côté d'une variante du mode de réalisation illustré par la figure 6 ;
- la figure 8 est une vue en coupe de côté d'une autre variante du mode de réalisation illustré par la figure 6 ;
- la figure 9 est une vue de dessus d'un premier mode de réalisation d'une deuxième approche d'une palette pare-soleil selon l'invention, selon laquelle le support de la palette est solidaire d'un organe mobile faisant partie d'un dispositif d'occultation du pavillon du véhicule ;
- la figure 10 est une vue de dessus d'une variante du mode de réalisation illustré par la figure 9, selon laquelle le véhicule est équipé de deux stores d'occultation dont les barres de tirage portent chacune une palette pare-soleil selon l'invention ;
- la figure 11 est une vue de dessus d'un deuxième mode de réalisation de la deuxième approche d'une palette pare-soleil selon l'invention ;
- la figure 12 est une vue de dessus d'une variante du mode de réalisation illustré par la figure 11.

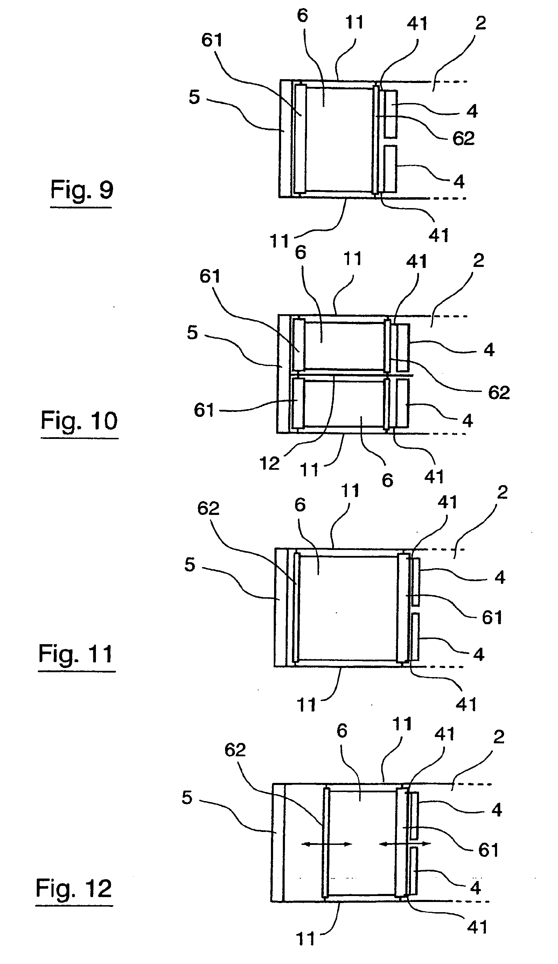

L'invention est illustrée dans les figures 9 à 12 seulement.

Tel que mentionné précédemment, le principe de l'invention consiste à prévoir des moyens permettant de déplacer les palettes pare-soleil entre une position opérationnelle dans laquelle elle protège les yeux du conducteur et/ou du passager avant et une position de rangement éloignée de la position opérationnelle vers l'arrière du véhicule.

On comprend donc que l'invention vise, de manière générale, une palette pare-soleil montée sur un ou plusieurs supports susceptibles d'être déplacés d'avant en arrière, et inversement, par rapport au pavillon du véhicule.

Selon une première approche de l'invention, ce ou ces supports de palettes pare-soleil sont non solidaires, ou susceptibles de l'être, d'un organe mobile faisant partie d'un dispositif d'occultation du pavillon du véhicule.

Ceci est illustré par les figures 9 à 12.

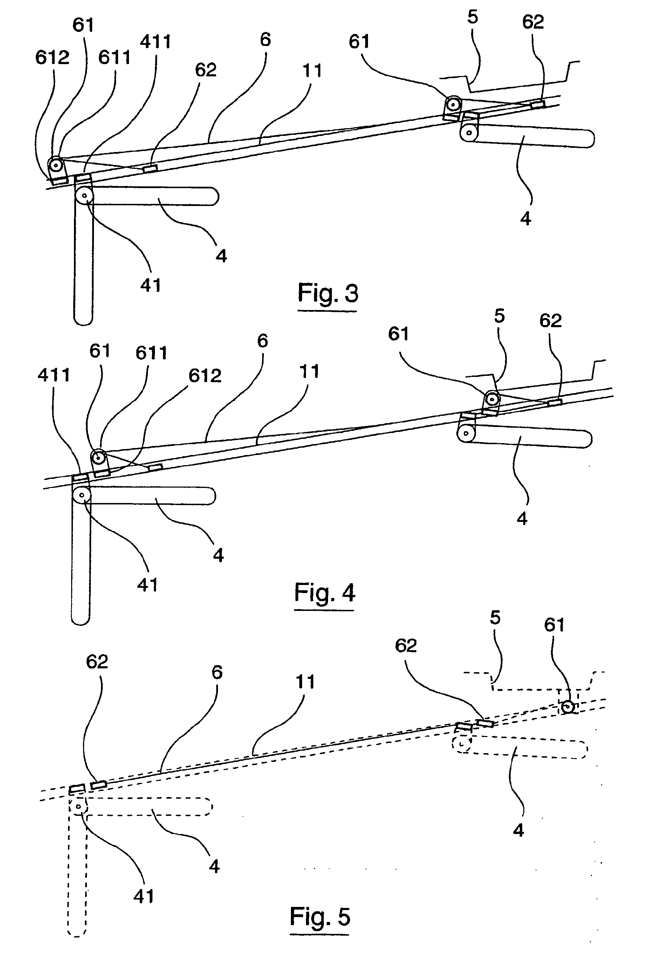

Selon le mode de réalisation illustré par la figure 3, le pavillon du véhicule est équipé de rails 11 permettant de guider le déplacement d'une barre 411 portant le support 41 de la palette 4.

Ainsi, selon le principe de l'invention, les supports 41 des palettes pare-soleil 4 peuvent être déplacés le long du pavillon 1, entre au moins deux positions :
- une position correspondant sensiblement à celle illustrée par la figure 2, dans laquelle les palettes 4 peuvent être rabaissées en direction du pare-brise 2 de façon à protéger les yeux des occupants des sièges avants contre les rayons du soleil ;
- une position de rangement dans laquelle les palettes pare-soleil 4 sont éloignées du pare-brise, vers l'arrière du véhicule.

Selon ce mode de réalisation, le pavillon du véhicule est également équipé d'un store d'occultation, du type mettant en oeuvre une toile d'occultation 6 mobile entre une position repliée et une position déployée.

Cette toile d'occultation 6 est solidaire par l' une de ses extrémités d'un tube d'enroulement 61 et, par l'autre de ses extrémités d'une barre de tirage 62.

Le dépliement/reploiement de la toile est assuré par le déplacement du tube d'enroulement 61 le long des rails 11, le tube d'enroulement 61 étant monté dans un boîtier 611 portant à chacune de ses extrémités un patin 612 susceptible de coulisser le long du rail 11 correspondant.

On note que, selon ce mode de réalisation, la barre de tirage 62 est également montée mobile le long des rails 11.

On note également que, selon ce mode de réalisation, la barre de coulissement 411 portant les supports 41 de la palette 4 est intercalée, dans les rails 11, entre les patins 612 du boîtier 611 et la barre de tirage 62.

Ainsi, cet agencement permet de :
- déployer la toile 6 tout en laissant la palette 4 en position de rangement (telle qu'elle apparaît sur la partie droite de la figure 3) ;
- déployer la toile 6 en amenant la palette 4 dans sa position opérationnelle (telle qu'elle apparaît sur la partie gauche de la figure 3), le déplacement vers l'avant de la palette 4 imposant le déplacement vers l'avant du tube d'enroulement 61 ;
- ramener la palette 4 en position de rangement lors du reploiement de la toile 6, le déplacement vers l'arrière du tube d'enroulement 61 imposant le déplacement vers l'arrière de la palette 4.

La figure 4 illustre une variante du mode de réalisation qui vient d'être décrit, selon laquelle la barre de coulissement 411 est placée en avant (par rapport à l'axe longitudinal du véhicule) du tube d'enroulement 61, le long des rails 11.

Ainsi cet agencement permet de :
- déplacer la palette 4 le long des rails 11, indépendamment de tout déplacement du tube d'enroulement 61 et/ou de la barre de tirage 62 le long des rails 11 ;
- déployer la toile 6 tout en amenant la palette 4 en position opérationnelle (telle qu'elle apparaît sur la partie droite de la figure 4), le déplacement vers l'avant du tube d'enroulement 61 imposant le déplacement vers l'avant de la palette 4 ;
- replier la toile 6 en ramenant la palette 4 en position de rangement (telle qu'elle apparaît sur la partie droite de la figure 4), le déplacement vers l'arrière de la palette 4 imposant le déplacement vers l'arrière du tube d'enroulement 61.

La figure 5 illustre une autre variante du mode de réalisation représenté par la figure 3, selon laquelle la barre de tirage 62 est mobile le long des rails 11 tandis que le tube d'enroulement 61 occupe une position fixe sur le pavillon du véhicule.

Par ailleurs, il peut être prévu des moyens d'accouplement amovible (tel que par exemple un crochet, des moyens encliquetables, des bandes auto-agrippantes...) pour rendre solidaire ou pas, selon le besoin de l'utilisateur, la barre de coulissement 411 et l'organe mobile du dispositif d'occultation se trouvant le plus en avant du véhicule (le tube d'enroulement 61 dans les cas illustrés par les figures 3 et 4, la barre de tirage 62 dans le cas illustré par la figure 5).

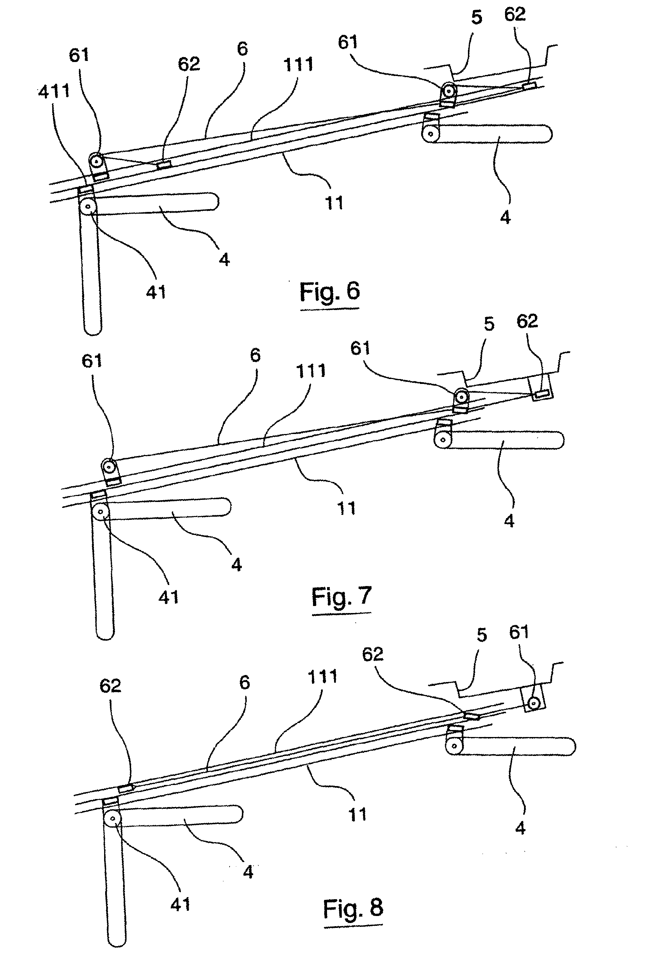

La figure 6 illustre un autre mode de réalisation.

Selon ce mode de réalisation, les rails 11, le long desquels la barre de coulissement 411 portant les supports 41 de la palette 4 est susceptible de coulisser, sont surmontés par des rails 111 formant moyen de guidage pour le déploiement/repliement de la toile 6 du store d'occultation du pavillon.

Ainsi, la palette 4 peut être déplacée entre sa position opérationnelle (telle qu'elle apparaît sur la partie gauche de la figure 6) et sa position de rangement (telle qu'elle apparaît sur la partie droite de la figure 6) indépendamment de tout déplacement du tube d'enroulement 61 et/ou de la barre de tirage 62 du store d'occultation du pavillon.

On note que, tel qu'illustré par la figure 6, le tube d'enroulement 61 et la barre de tirage 62 sont tous deux mobiles le long des rails 111.

La figure 7 illustre une variante du mode de réalisation qui vient d'être décrit, selon laquelle seul le tube d'enroulement 61 est mobile le long des rails 111, la barre de tirage 62 occupant une position fixe sur le pavillon du véhicule.

La figure 8 illustre une autre variante selon laquelle seule la barre de tirage 62 est mobile le long des rails 111, le tube d'enroulement 61 occupant une position fixe sur le pavillon du véhicule.

On note par ailleurs que l'organe fixe (par rapport aux rails 11 ou aux rails 111) du store d'occultation du pavillon est monté sur la poutre 5 sur laquelle est fixée le bord avant du pavillon 1 (figure 2).

Selon l'invention, le ou les supports de palettes pare-soleil sont portés par un organe mobile le long du pavillon du véhicule et faisant partie d'un store d'occultation du pavillon.

Ceci est illustré par les figures 9 à 12.

Selon le mode de réalisation illustré par la figure 9, le pavillon 1 du véhicule est équipé d'un store d'occultation, du type de celui décrit précédemment, mettant en oeuvre une toile d'occultation 6, un tube d'enroulement 61 et une barre de tirage 62.

Selon ce mode de réalisation, la barre de tirage 62 est mobile le long du pavillon, et le guidage de son déplacement est assuré par des rails 11 prévus de part et d'autre du pavillon 1, la barre de tirage 62 présentant à chacune de ses extrémités un patin susceptible de coulisser le long du rail 11 correspondant.

De plus, la barre de tirage 62 porte les supports 41 des palettes pare-soleil 4, permettant à celles-ci d'être déplacées le long du pavillon 1, selon le principe de l'invention, entre au moins deux positions :
- une position correspondant sensiblement à celle illustrée par la figure 2, dans laquelle les palettes 4 peuvent être rabaissées en direction du pare-brise 2 de façon à protéger les yeux des occupants des sièges avants contre les rayons du soleil ;
- une position de rangement dans laquelle les palettes pare-soleil 4, par l'intermédiaire de la barre de tirage 62, sont ramenées au voisinage du tube d'enroulement 61.

On note que, selon ce mode de réalisation, le tube d'enroulement 61 est monté sur le pavillon 1, ou sur les rails 11 de façon à occuper une position fixe le long des rails 11.

On note également que le tube d'enroulement est monté au voisinage d'une poutre 5 sur laquelle est fixé le bord avant du pavillon 1 (figure 2), le tube d'enroulement pouvant, selon un autre mode de réalisation envisageable, être monté directement sur cette poutre.

La figure 10 illustre une variante du premier mode de réalisation qui vient d'être décrit. Tel que cela apparaît clairement, le pavillon est équipé de deux stores d'occultation, l'un monté côté conducteur, l'autre monté côté passager avant, chacun de ces stores comprenant une barre de tirage 62 portant un support 41 de palette pare-soleil 4.

Pour assurer le guidage en translation des barres de tirage 62, on prévoit en plus des rails latéraux 11, un rail central 12.

La figure 11 illustre un autre mode de réalisation selon lequel la barre de tirage 62 est montée fixe le long des rails 11, au voisinage de la poutre 5, tandis que le tube d'enroulement 61 est mobile le long des rails 11 et porte des supports 41 des palettes pare-soleil 4.

Selon ce mode de réalisation, le tube d'enroulement 61 est monté dans un capot (non représenté) présentant à chacune de ses extrémités un patin de coulissement susceptible de se déplacer dans les rails 11 en étant guidé par ceux-ci.

On note que, de façon similaire à la variante du premier mode de réalisation, une variante de ce deuxième mode de réalisation peut être envisagée selon laquelle le pavillon est équipé de deux stores, l'un monté côté conducteur, l'autre monté côté passager avant, chacun des stores comprenant un tube d'enroulement mobile le long d'un rail latéral et d'un rail central et portant un support de palettes pare-soleil.

La figure 12 illustre encore un autre mode de réalisation de l'invention, selon lequel le tube d'enroulement 61 portant les supports 41 des palettes pare-soleil 4 est mobile le long des rails 11, la barre de tirage 62 étant également montée mobile le long des rails 11.

Selon ce mode de réalisation, les palettes pare-soleil 4 peuvent être amenées dans leur position opérationnelle (correspondant approximativement à celle illustrée par la figure 2) dans deux configurations distinctes du store d'occultation : l'une dans laquelle la barre de tirage 62 est éloignée du tube d'enroulement 61 (la toile d'occultation 6 étant par conséquent au moins partiellement déployée), l'autre dans laquelle la barre de tirage 62 et le tube d'enroulement 61 sont maintenus au voisinage l'un de l'autre (la toile d'occultation 6 étant alors en position repliée).

On comprend qu'une variante de ce mode de réalisation consiste à inverser les positions du tube d'enroulement et de la barre de tirage, celle-ci portant dans ce cas les supports des palettes pare-soleil.

A nouveau, on note qu'une autre variante de ce mode de réalisation peut être envisagée, selon laquelle deux stores d'occultation fonctionnant de façon similaire sont montés en regard du pavillon, l'un côté conducteur l'autre côté passager avant.

Par ailleurs, d'autres modes de réalisation et d'autres perfectionnements peuvent être envisagés, par exemple en prévoyant de coupler le ou les tubes d'enroulement à des moyens de rappel élastiques, ou encore en prévoyant des moyens de motorisation du ou des stores.

## Revendications

1. Dispositif d'occultation d'une baie ménagée dans le pavillon (1) d'un véhicule, du type mettant en oeuvre une toile d'occultation (6) mobile entre une position repliée et une position déployée, et d'au moins une palette pare-soleil **caractérisé en ce que** ladite palette est portée par au moins un support (41) monté mobile sur ledit pavillon (1), ou monté sur un élément solidaire dudit pavillon, de telle sorte que ladite palette pare-soleil (4) puisse occuper au moins deux positions :
- une position de protection des yeux des occupants des sièges avants dudit véhicule contre le rayonnement du soleil ;
- une position de rangement, éloignée de ladite position de protection vers l'arrière dudit véhicule,
ladite toile (6) étant solidaire par l'une de ses extrémités d'au moins un organe dit proximal et susceptible d'être déplacé le long dudit pavillon (1) entre au moins deux positions :
- une première position correspondant sensiblement à ladite position de protection de ladite palette (4) dans laquelle ladite palette (4) protège les yeux des occupants des sièges avants dudit véhicule contre le rayonnement du soleil ;
- une position correspondant sensiblement à ladite position de rangement de ladite palette (4), éloignée de ladite première position vers l'arrière dudit véhicule,
ladite toile (6) étant solidaire par son autre extrémité d'un organe dit distal susceptible d'occuper au moins une position correspondant sensiblement à ladite position de rangement de ladite palette (4), ledit organe proximal portant ledit ou lesdits supports (41) de ladite palette pare-soleil (4).

2. Dispositif d'occultation en combinaison avec au moins une palette pare-soleil selon la revendication 1, **caractérisé en ce que** ledit organe proximal est une barre de tirage (62), ledit organe distal comprenant
le tube d'enroulement (61) de ladite toile (6).

3. Dispositif d'occultation en combinaison avec au moins une palette pare-soleil selon la revendication 1, **caractérisé en ce que** ledit organe proximal comprend le tube d'enroulement (61) de ladite toile (6), ledit organe distal étant une barre de tirage (62).

4. Dispositif d'occultation en combinaison avec au moins une palette pare-soleil selon les revendications 2 ou 3, **caractérisée en ce que** ladite barre de tirage (62) présente à chacune de ses extrémités au moins un patin de coulissement susceptible de coulisser le long d'un premier rail.

5. Dispositif d'occultation en combinaison avec au moins une palette pare-soleil selon la revendication 4, **caractérisée en ce que** le tube d'enroulement (61) de ladite toile (6) est monté dans une position fixe le long dudit pavillon (1).

6. Dispositif d'occultation en combinaison avec au moins une palette pare-soleil selon la revendication 3, **caractérisée en ce que** ledit tube d'enroulement (61) est monté dans un boîtier ou un capot portant ledit ou lesdits supports (41).

7. Dispositif d'occultation selon la revendication 6, **caractérisée en ce que** ledit boîtier ou ledit capot présente à chacune de ses extrémités au moins un patin de coulissement susceptible de coulisser le long dudit rail.

8. Dispositif d'occultation en combinaison avec au moins une palette pare-soleil selon l'une quelconque des revendications 6 et 7, **caractérisée en ce que** la barre de tirage (62) de ladite toile (6) est montée fixe le long dudit pavillon (1).

9. Dispositif d'occultation en combinaison avec au moins une palette pare-soleil selon l'une quelconque des revendications 6 et 7, **caractérisée en ce que** la barre de tirage (62) de ladite toile (6) est montée mobile le long dudit pavillon (1).

10. Dispositif d'occultation en combinaison avec au moins une palette pare-soleil selon l'une quelconque des revendications 1 à 9, **caractérisée en ce qu'**elle est montée mobile à rotation sur ledit ou lesdits supports (41), entre une position rabattue contre ou au voisinage du pavillon (1) dudit véhicule et une position rabaissée en direction dudit pare-brise (2).

11. Véhicule comprenant au moins un dispositif d'occultation en combinaison avec au moins une palette pare-soleil selon l'une quelconque des revendications 1 à 10.

12. Véhicule selon la revendication 11, **caractérisé en ce qu'**il comprend deux palettes pare-soleil (4), l'une montée côté conducteur, l'autre montée côté passager avant, et **en ce qu'**il comprend au moins deux rails latéraux (11) s'étendant de part et d'autre dudit pavillon (1) et au moins un rail central (12), parallèle auxdits rails latéraux (11), de façon à guider le coulissement dudit ou desdits supports de chacune desdites palettes pare-soleil (4).

## Claims

1. Masking device for an opening arranged in the roof (1) of a vehicle, said device being of the type making use of a masking cloth (6) which is movable between a folded-up position and a deployed position, and for at least one sun-visor panel,
**characterised in that** the said panel is carried by at least one support (41) which is mounted in a movable manner on the said roof (1), or mounted on an element which is integral with the said roof, in such a way that the said sun-visor panel (4) is capable of occupying at least two positions:
- a position for protecting the eyes of the occupants of the front seats of the said vehicle against the rays of the sun;
- a storage position, moved away from the said protective position towards the rear of the vehicle,
the said cloth (6) being integral, via one of its ends, with at least one so-called "proximal" component which is capable of being displaced along the said roof (1) between at least two positions:
- a first position which substantially corresponds to the said protective position of the said panel (4) in which the said panel (4) protects the eyes of the occupants of the front seats of the said vehicle against the rays of the sun;
- a position which substantially corresponds to the said storage position of the said panel (4), moved away from the said first position towards the rear of the said vehicle,
the said cloth (6) being integral, via its other end, with a so-called "distal" component which is capable of occupying at least one position which substantially corresponds to the said storage position of the said panel (4), the said proximal component carrying the said support or supports (41) of the said sun-visor panel (4).

2. Masking device in combination with at least one sun-visor panel according to claim 1, **characterised in that** the said proximal component is a draw-bar (62), the said distal component comprising the rolling-up tube (61) of the said cloth (6).

3. Masking device in combination with at least one sun-visor panel according to claim 1, **characterised in that** the said proximal component comprises the rolling-up tube (61) of the said cloth (6), the distal component being a draw-bar (62).

4. Masking device in combination with at least one sun-visor panel according to claim 2 or 3, **characterised in that** the said draw-bar (62) has, at each of its ends, at least one sliding shoe which is capable of sliding along a first rail.

5. Masking device in combination with at least one sun-visor panel according to claim 4, **characterised in that** the rolling-up tube (61) of the said cloth (6) is mounted in a fixed position along the said roof (1).

6. Masking device in combination with at least one sun-visor panel according to claim 3, **characterised in that** the said rolling-up tube (61) is mounted in a casing or a cover carrying the said support or supports (41).

7. Masking device in combination with at least one sun-visor panel according to claim 6, **characterised in that** the said casing or the said cover has, at each of its ends, at least one sliding shoe which is capable of sliding along the said rail.

8. Masking device in combination with at least one sun-visor panel according to either of claims 6 and 7, **characterised in that** the draw-bar (62) of the said cloth (6) is mounted in a fixed manner along the said roof (1).

9. Masking device in combination with at least one sun-visor panel according to either of claims 6 and 7, **characterised in that** the draw-bar (62) of the said cloth (6) is mounted so as to be movable along the said roof (1).

10. Masking device in combination with at least one sun-visor panel according to any of claims 1 to 9, **characterised in that** said panel is mounted so as to be movable in rotation on the said support or supports (41), between a position folded back against, or in the vicinity of, the roof (1) of the said vehicle and a position lowered towards the said windscreen (2).

11. Vehicle comprising at least one masking device in combination with at least one sun-visor panel according to any of claims 1 to 10.

12. Vehicle according to claim 11, **characterised in that** it comprises two sun-visor panels (4), one mounted on the driver's side and the other mounted on the front passenger's side, and **in that** it comprises at least two lateral rails (11) extending on either side of the said roof (1) and at least one central rail (12), parallel to the said lateral rails (11), so as to guide the sliding of the said support or supports of each of the said sun-visor panels (4).

## Patentansprüche

1. Vorrichtung zum Verdunkeln einer Fensteröffnung, die in dem Himmel (1) eines Fahrzeugs eingerichtet ist, des Typs, der ein Verdunkelungstuch (6) verwendet, das zwischen einer gefalteten Position und einer ausgebreiteten Position beweglich ist, und mindestens eine Sonnenblende, **dadurch gekennzeichnet, dass** die Blende von mindestens einem Träger (41) getragen wird, der beweglich auf dem Himmel (1) montiert ist, oder der auf ein Element montiert ist, das fest mit dem Himmel verbunden ist, so dass die Sonnenblende (4) mindestens zwei Positionen belegen kann:
- eine Position zum Schutz der Augen der Insassen der Vordersitze des Fahrzeugs vor der Strahlung der Sonne;
- eine Verstauposition, die von der Schutzposition zur Rückseite des Fahrzeugs hin entfernt ist,
wobei das Tuch (6) fest mit einem seiner Enden mit mindestens einem proximal genannten Organ verbunden ist und entlang des Himmels (1) zwischen mindestens zwei Positionen bewegt werden kann:
- einer ersten Position, die im Wesentlichen der Schutzposition der Blende (4) entspricht, in der die Blende (4) die Augen der Insassen der Vordersitze des Fahrzeugs vor der Strahlung der Sonne schützt;
- einer Position, die im Wesentlichen der Verstauposition der Blende (4), von der ersten Position zur Rückseite des Fahrzeugs hin entfernt entspricht,
wobei das Tuch (6) an seinem anderen Ende mit einem distal genannten Organ fest verbunden ist, das mindestens eine Position einnehmen kann, die im Wesentlichen der Verstauposition der Blende (4) entspricht, wobei das proximale Organ den oder die Träger (41) der Sonnenblende (4) trägt.

2. Verdunkelungsvorrichtung kombiniert mit mindestens einer Sonnenblende nach Anspruch 1, **dadurch gekennzeichnet, dass** das proximale Organ eine Zugstange (62) ist, wobei das distale Organ das Aufrollrohr (61) des Tuchs (6) aufweist.

3. Verdunkelungsvorrichtung kombiniert mit mindestens einer Sonnenblende nach Anspruch 1, **dadurch gekennzeichnet, dass** das proximale Organ das Aufrollrohr (61) des Tuchs (6) aufweist, wobei das distale Organ eine Zugstange (62) ist.

4. Verdunkelungsvorrichtung kombiniert mit mindestens einer Sonnenblende nach den Ansprüchen 2 oder 3, **dadurch gekennzeichnet, dass** die Zugstange (62) an jedem ihrer Enden mindestens eine Gleitkufe aufweist, die entlang einer ersten Schiene gleiten kann.

5. Verdunkelungsvorrichtung kombiniert mit mindestens einer Sonnenblende nach Anspruch 4, **dadurch gekennzeichnet, dass** das Aufrollrohr (61) des Tuchs (6) in einer stationären Position entlang des Himmels (1) montiert ist.

6. Verdunkelungsvorrichtung kombiniert mit mindestens einer Sonnenblende nach Anspruch 3, **dadurch gekennzeichnet, dass** das Aufrollrohr (61) in einem Gehäuse oder einer Haube montiert ist, die den oder die Träger (41) trägt.

7. Verdunkelungsvorrichtung kombiniert mit mindestens einer Sonnenblende nach Anspruch 6, **dadurch gekennzeichnet, dass** das Gehäuse oder die Haube an jedem seiner Enden mindestens eine Gleitkufe aufweist, die entlang der Schiene gleiten kann.

8. Verdunkelungsvorrichtung kombiniert mit mindestens einer Sonnenblende nach einem der Ansprüche 6 und 7, **dadurch gekennzeichnet, dass** die Zugstange (62) des Tuchs (6) entlang des Himmels (1) stationär montiert ist.

9. Verdunkelungsvorrichtung kombiniert mit mindestens einer Sonnenblende nach einem der Ansprüche 6 und 7, **dadurch gekennzeichnet, dass** die Zugstange (62) des Tuchs (6) entlang des Himmels (1) beweglich montiert ist.

10. Verdunkelungsvorrichtung kombiniert mit mindestens einer Sonnenblende nach den Ansprüchen 1 bis 9, **dadurch gekennzeichnet, dass** sie in Drehung auf dem oder den Trägern (41) zwischen einer gegen oder in die Nähe des Himmels (1) des Fahrzeugs umgeschlagenen und einer in Richtung der Windschutzscheibe (2) abgesenkten Position beweglich montiert ist.

11. Fahrzeug, das mindestens eine Verdunkelungsvorrichtung kombiniert mit mindestens einer Sonnenblende nach einem der Ansprüche 1 bis 10 aufweist.

12. Fahrzeug nach Anspruch 11, **dadurch gekennzeichnet, dass** es zwei Sonnenblenden (4) aufweist, wobei die eine auf der Fahrerseite montiert ist und die andere auf der Beifahrerseite montiert ist, und dass es mindestens zwei seitliche Schienen (11), die sich zu beiden Seiten des Himmels (1) erstrecken, und mindestens eine zentrale Schiene (12), parallel zu den seitlichen Schienen (11) aufweist, so dass das Gleiten des Trägers oder der Träger jeder der Sonnenblenden (4) geführt wird.
